(19) **Europäisches Patentamt**
**European Patent Office**
**Office européen des brevets**

(11) **EP 1 481 367 B1**

(12) **EUROPÄISCHE PATENTSCHRIFT**

(45) Veröffentlichungstag und Bekanntmachung des Hinweises auf die Patenterteilung:
**29.07.2009 Patentblatt 2009/31**

(51) Int Cl.:
***G06K 19/07*** *(2006.01)*  ***G06K 7/00*** *(2006.01)*
***G01S 13/84*** *(2006.01)*

(21) Anmeldenummer: **03709645.0**

(22) Anmeldetag: **24.02.2003**

(86) Internationale Anmeldenummer:
**PCT/DE2003/000582**

(87) Internationale Veröffentlichungsnummer:
**WO 2003/074887 (12.09.2003 Gazette 2003/37)**

(54) **VORRICHTUNG UND VERFAHREN ZUM ÜBERTRAGEN VON DATEN MIT EINEM AKTIVEN BACKSCATTER-TRANSPONDER**

APPARATUS AND METHOD FOR TRANSMITTING DATA BY WAY OF AN ACTIVE BACKSCATTER TRANSPONDER

APPAREIL ET PROCEDE DE TRANSMISSION DE DONNEES AU MOYEN D'UN TRANSPONDEUR ACTIF A RETRODIFFUSION

(84) Benannte Vertragsstaaten:
**DE FR GB**

(30) Priorität: **07.03.2002 DE 10210037**

(43) Veröffentlichungstag der Anmeldung:
**01.12.2004 Patentblatt 2004/49**

(73) Patentinhaber: **Symeo GmbH**
**85579 Neubiberg (DE)**

(72) Erfinder:
• **SEISENBERGER, Claus**
 **84181 Neufrannhofen (DE)**
• **NALEZINSKI, Martin**
 **81541 München (DE)**

• **VOSSIEK, Martin**
 **31139 Hildesheim (DE)**
• **HEIDE, Patric**
 **85591 Vaterstetten (DE)**

(74) Vertreter: **Schulze, Mark**
**Von Lieres Brachmann Schulze**
**Patentanwälte**
**Grillparzerstrasse 12A**
**81675 München (DE)**

(56) Entgegenhaltungen:
**DE-A- 10 032 822     DE-A- 19 933 814**
**US-A- 4 786 903**

**Beschreibung**

Die Erfindung bezieht sich auf eine Vorrichtung mit den oberbegrifflichen Merkmalen des Patentanspruch 1, und ein Verfahren zum Übertragen von Daten mit einem Backscatter-Transponder.

Verfahren und Anordnungen zum Austausch von Daten und zur Messung der Entfernung von einer Basisstation zu einem modulierten Transponder existieren in vielfältiger Form und sind seit langem bekannt. Als Transponder üblich sind z.B. sogenannten Backscatter-Transponder, die über keine eigene Signalquelle verfügen, sonder das empfangenen Signal lediglich, gegebenenfalls verstärkt zurückspiegeln. Man spricht in diesem Zusammenhang auch von modulierter Rückstreuung. Obwohl es sich bei dem Backscatter-Transponder um den Daten-Sender handelt, wird in einem Backscatter-Transponder üblicherweise kein eigenes Hochfrequenz-Signal erzeugt. Von der eigentlichen Daten-Empfangsstation wird zunächst ein hochfrequentes Hilfs-Trägersignal zum Transponder gesendet, das dieser zumeist mit einer niederfrequenten Modulation zurücksendet.

Der entscheidende Vorteil den Kommunikationssystemen basierend auf Backscatter-Transpondern gegenüber Standard-Kommunikationssystemen mit getrennten Signalquellen in allen Teilstationen aufweisen, besteht daher darin, dass das im Empfänger empfangene Signal durch Mischen mit dem Hilfs-Trägersignal nahezu optimal auf die Modulationsbandbreite eingeschränkt werden kann und daher ein nahezu optimales Rauschverhalten erzielt wird. Mit den bei Kommunikationssystemen sonst üblichen getrennten Signalquellen im Sender und Empfänger ist es insbesondere bei niedrigeren Datenraten im Allgemeinen nicht bzw. nur mit hohem Aufwand möglich, die getrennten Quellen derart exakt bezüglich Frequenz und Phase zu regeln, dass eine vergleichbar geringe Empfängerbandbreite zu realisieren wäre.

Der entscheidenden Nachteil von Backscatter-Transpondersystemen ist jedoch, dass das Hochfrequenzsignal den Weg vom Empfänger zum Transponder hin und zurück durchlaufen muss und daher, basierend auf der Radargleichung, das Signal-zu-Rausch-Verhältnis (SNR) der gesamten Übertragungstrecke proportional zur 4-ten Potenz der Entfernung abnimmt. Wegen der mit der Frequenz stark ansteigenden Freifelddämpfung lassen sich insbesondere sehr hochfrequente Backscatter-Transponder im GHz-Bereich kaum mit einem befriedigenden Signal-zu-Rausch-Verhältnis realisieren.

Wird, wie dies bei Standard-Kommunikationssystemen üblich ist, im Daten-Sender, insbesondere im Transponder mit einer eigenen Quelle ein Daten-Signal generiert, so durchläuft das HF-Signal den Weg Sender/Empfänger nur einmal. In diesem Fall ist das SNR nur umgekehrt proportional zur 2-ten Potenz der Entfernung. Hinzu kommt, dass auch sonstige Dämpfungen / Verluste auf dem Übertragungsweg nur einmal und nicht zweimal auf das Signal einwirken. Daher ist, insbesondere bei größeren Entfernungen, das SNR hierbei um Größenordnungen höher als bei einfachen Backscattersystemen.

Aus DE 100 32 822 A1 ist eine neuartige Vorrichtung zur Erzeugung eines Oszillatorsignals basierend auf einem Basissignal mit einem Oszillator zur aktiven Konstruktion des Oszillatorsignals durch Oszillationen, einem Eingang für das Basissignal und einem Ausgang für das erzeugte Oszillatorsignal bekannt, wobei der Oszillator durch das Basissignal zur Erzeugung des Oszillatorsignals quasiphasenkohärent zum Basissignal anregbar ist. Die Vorrichtung ist dabei insbesondere ein Sender in Form eines Transponders und weist einen mit der Transponderantenne verbundenen Oszillator auf. Zum Anregen des Oszillators ist außerdem eine Taktsteuerung bereitgestellt. Der Oszillator wird mit der Taktsteuerung durch ein Taktsteuerungssignal zyklisch ein- und ausgeschaltet. Das vom Oszillator generierte Signal ist dabei quasikohärent zu dem empfangenen Basissignal. Durch das Ein- und Ausschalten des Oszillators wird auch seine quasiphasenkohärente Anregbarkeit geschaltet. Die unabhängigen Ansprüche zeigen im Oberbegriff die Merkmale soweit sie aus DE 10032822 bekannt sind.

Die Aufgabe der Erfindung besteht darin, eine derartige Vorrichtung bzw. ein Kommunikationssystem mit einer solchen Vorrichtung und ein Verfahren zum Übertragen von Daten mit einer solchen Vorrichtung hinsichtlich des Einsatzbereiches zu verbessern.

Die Erfindung ist Gegenstand der unabhängigen Ansprüche.

Vorteilhafte Ausgestaltungen, insbesondere Einrichtungen und Systeme sind Gegenstand von abhängigen Ansprüchen.

Vorliegend werden ein neuartiger aktiver Backscatter-Transponder und ein Kommunikationssystem vorgestellt, welche die Vorteile verschiedener Systeme verbinden, also insbesondere die einfache Realisierung einer nahezu optimal geringen Empfängerbandbreite und einer quadratischen Abhängigkeit des SNR von der Entfernung ausnutzen. Desweiteren werden aufbautechnische Lösungen bereitgestellt, die eine besonders günstige Umsetzung der für sich aus der DE 100 32 822 A1 bekannten Anordnung zur Übertragung von Daten erlauben.

Vorteilhaft ist entsprechend eine Vorrichtung - insbesondere ein aktiver Backscatter-Transponder bzw. Backscatter-Transponder- zum Erzeugen eines Oszillatorsignals basierend auf einem Basissignal mit einem Oszillator zum aktiven Konstruieren des Oszillatorsignals durch Oszillationen, einem Eingang für das Basissignal und einem Ausgang für das erzeugte Oszillatorsignal ausgestattet, wobei der Oszillator durch das Basissignal zum Erzeugen des Oszillatorsignals quasiphasenkohärent zum Basissignal anregbar ist, wenn sie auch eine Dateneinfügungseinrichtung aufweist, die zum Einfügen von Daten oder einem Datensignal in das quasiphasenkohärente Oszillatorsignal ausgebildet ist.

Die Dateneinfügungseinrichtung ist vorteilhafterweise ein Taktgenerator, dessen Taktfolge aus den einzufügenden Daten abgeleitet wird, und welcher den Oszillator zu einer Grundschwingung anregt, der die Daten aufmoduliert sind. Möglich ist zum Einfügen von Daten z.B. auch eine Dateneinfügungseinrichtung, die als eine Phasensteuereinrichtung ausgebildet ist, welche die Daten mittels einer schaltbaren Phasenverschiebung auf das Oszillatorsignal aufmoduliert.

Zum Verarbeiten eines solchen als Empfangssignal empfangenen quasiphasenkohärenten Signals mit eingesetzten Daten ist eine Vorrichtung - insbesondere ein Empfänger - zweckmäßig, die eine Trennungseinrichtung zum Entfernen der Signalanteile des senderseitigen Oszillators aus dem quasiphasenkohärenten Empfangssignal mittels eines Basissignals eines empfängerseitigen Oszillators und eine Daten-Rückgewinnungseinrichtung zum Rückgewinnen der eingefügten Daten aufweist.

Ein solcher Empfänger ist besonders vorteilhaft mit einem Transmissionsmischer ausgestattet, der einen Eingang zum Anlegen des vom Oszillator generierten Signals, einen Ausgang zum Ausgeben dieses Signals als Basissignal durch den Transmissionsmischer hindurch und zum Übertragen des Basissignals zu einer eigentlichen Daten-Sendestation, einen Eingang zum Anlegen des Empfangssignals und einen Ausgang zum Ausgeben des heruntergemischten Empfangssignal aufweist, wobei insbesondere der Ausgang zum Ausgeben des Basissignals und der Eingang des Empfangssignals zusammenfallen können.

Besonders variabel einsetzbar ist eine Vorrichtung - insbesondere ein Transceiver als Kombinationseinrichtung, welche je nach Einsatzzweck als Sender und/oder Empfänger einsetzbar ist. Ein solcher Transceiver weist zweckmäßigerweise einen Oszillator zum Erzeugen eines oszillierenden Signals, einen Taktgenerator zum Anregen des Oszillators, einen Mischer mit einem Eingang zum Anlegen des oszillierenden Signals von dem Oszillator, zumindest eine Schnittstelle zum Senden und/oder Empfangen von Signalen, wobei die Schnittstelle mit dem Mischer verbunden ist, zumindest einen Ausgang des Mischers zum Ausgeben eines über die Schnittstelle empfangenen und mit dem oszillierenden Signal heruntergemischten Signals, eine mit dem Mischer verbundene Signal- und Datenverarbeitungseinrichtung auf. Die Signal- und Datenverarbeitungseinrichtung ist dabei als eine Baueinheit oder mehrere Baueinheiten ausgebildet und dient wahlweise entweder zum Anlegen eines empfangenen Basissignals an den Oszillator und zum Einfügen von Daten oder einem Datensignal in das oszillierende Signal zum anschließenden Ausgeben über die Schnittstelle als die Dateneinfügungseinrichtung oder zum Rückgewinnen der eingefügten Daten aus einem über die Schnittstelle empfangenen und über den Mischer heruntergemischten Signal als die Daten-Rückgewinnungseinrichtung.

In den Empfängern sind verschiedenartigste Demodulatoren einsetzbar, insbesondere ein Demodulator mit einem Phasenkomparator und einem Frequenzdiskriminator zum Beaufschlagen des Signals mit einer frequenzabhängigen Phasenverschiebung, denen beiden das vom Mischer stammende Empfangssignal zugeführt wird, wobei das Ausgangssignal des Frequenzdiskriminator einem weiteren Eingang des Phasenkomparators zugeführt wird, dessen Ausgang die zurückgewonnenen Daten ausgibt. Ein weiteres vorteilhaftes Beispiel ist der Einsatz eines Demodulators mit zumindest zwei unterschiedlichen Bandpassfilter- / Detektor-Ketten, deren Ausgänge sowohl einem Addierer zum Ausgeben eines Maßes für den Signalpegel als auch einem Differenzverstärker mit nachgeschaltetem Komparator zum Ausgeben der rekonstruierten Daten anliegen.

Vorteilhafterweise können auch Transpondersysteme, die mit derart quasiphasenkohärenten Signalen funktionieren zum Übertragen von Daten verwendet werden. Ein solches Transpondersystem kann dabei die Übertragung von Daten in nur einer der beiden Richtungen oder auch in beiden Richtungen ermöglichen. Ein solches Transpondersystem weist in einer sehr komplexen Form mit jeweils zumindest einem Sender und zumindest einem Empfänger zum Bestimmen der Entfernung zwischen Sender und Empfänger mittels eines vom Empfänger zum Sender gesendeten Basissignals und eines vom Sender zum Empfänger zurückgesendeten und zum Basissignal quasiphasenkohärenten Signals, entsprechend im Sender bzw. Empfänger bereitgestellt auf eine Dateneinfügungseinrichtung, die zum Einfügen von Daten oder einem Datensignal in das von dem jeweiligen zu sendende Oszillatorsignal ausgebildet ist, und/oder eine Daten-Rückgewinnungseinrichtung zum Rückgewinnen in empfangene Daten eingefügten Daten.

Ein entsprechender Empfänger für ein solches entfernungsbestimmendes Transpondersystem weist zweckmäßigerweise einen Demodulator zum Zurückgewinnen ursprünglicher Daten, eine Messeinrichtung zum Bestimmen der Entfernung zwischen Sender und Empfänger, einen Oszillator, der ein hinsichtlich der Frequenz veränderbarer Oszillator ist, mit dem zur Entfernungsmessung geeignete frequenzmodulierte Signale erzeugbar sind, und einen Empfangsmischer auf, der zum Mischen empfangener Signale mit Signalen des Oszillators ausgelegt ist und der einen Ausgang zum Ausgeben daraus resultierender Signale aufweist, wobei der Ausgang mit dem Demodulator und der Messeinrichtung verbunden ist.

Zum Betreiben dieser Vorrichtungen und Systeme bietet sich ein Verfahren zum Übertragen von Daten an, bei dem ein Signal mit Hilfe von einem Oszillatoren erzeugt wird, der durch zumindest ein Steuersignal/Taktsignal quasiphasenkohärent anregbar gemacht wird. Der derart anregbar gemachte Oszillator wird dann von einem empfangenen Basissignal derart quasiphasenkohärent zu Schwingungen angeregt, dass das erzeugte Signal zum empfangenen Basissignal quasiphasenkohärent schwingt. Auf dieses quasiphasenkohärente Signal wird bei oder nach dessen Erzeugung ein Datensignal aufgeprägt.

Ausführungsbeispiele werden nachfolgend anhand der Zeichnung näher erläutert. Es zeigen:

Fig. 1     eine Anordnung eines Senders und eines Empfängers, wobei das Signal des Senders quasiphasenkohärent zu Signalen des Empfängers schwingt und Daten vom Sender zum Empfänger übertragen werden,

Fig. 2     eine Ausführungsform eines solchen Empfängers,

Fig. 3     eine Ausführungsform eines solchen Senders,

Fig. 4     eine Transceiver, der sowohl als ein solcher Sender als auch als ein solcher Empfänger einsetzbar ist,

Fig. 5     eine erste einsetzbare Demodulationseinrichtung,

Fig. 6     eine zweite einsetzbare Demodulationseinrichtung,

Fig. 7     einen solchen Empfänger mit zusätzlichen Einrichtungen zum Bestimmen einer Entfernung eines Senders und

Fig. 8     ein LTCC-Modul mit einer solchen Vorrichtung.

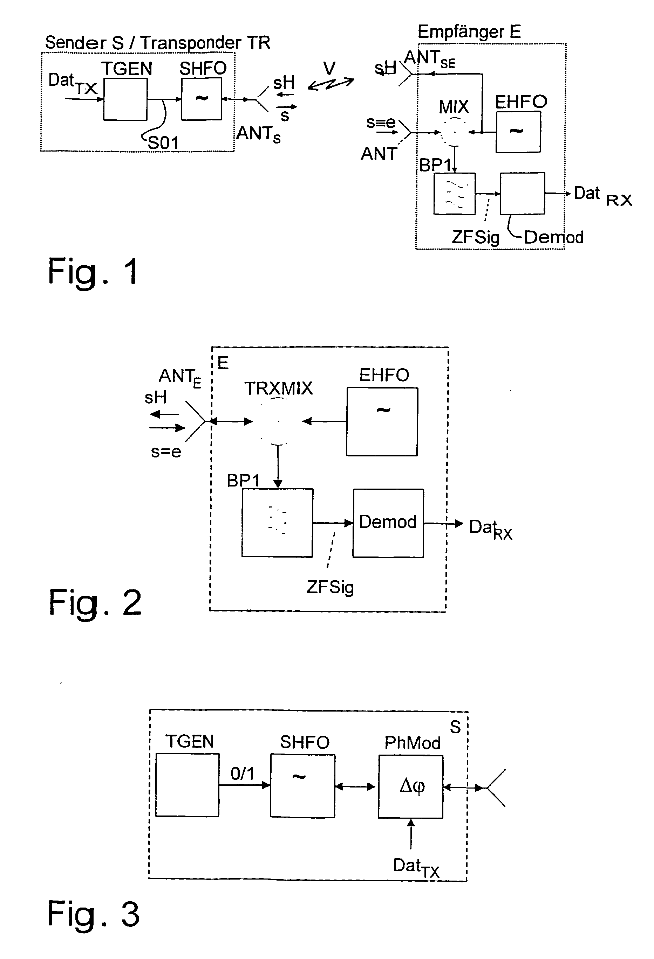

Figur 1 zeigt das Grundprinzip der zugrunde liegenden Anordnung. Die Basiselemente der Anordnung wurden für sich genommen bereits in der DE 100 32 822 A1 erläutert.

Wie aus Fig. 1 ersichtlich, besteht eine beispielhafte Anordnung aus einem Sender S und einem Empfänger E. Der Sender S erzeugt Daten $Dat_{TX}$, die mit einem Signal s über eine Schnittstelle V, insbesondere eine Funk-Schnittstelle zu dem Empfänger E übertragen werden sollen.

Im Empfänger E wird mit Hilfe eines empfängerseitigen Oszillators EHFO ein Hilfs-Trägersignal sH erzeugt und beim dargestellten Beispiel mittels entsprechender Antennen $ANT_{SE}$ und $ANT_S$ über die Schnittstelle V zum Sender S übertragen.

Im Sender S wird mittels eines senderseitigen aktiven Oszillators SHFO ein Signal s erzeugt, welches quasiphasenkohärent zu dem empfangenen Hilfs-Trägersignal sH schwingt und dem die zu übertragenden Daten $Dat_{TX}$ aufmoduliert werden bzw. wurden.

Senderseitig wird mit der Antenne $ANT_S$ das Hilfssignal sH des Empfängers E, das mit dem Oszillator EHFO generiert und über die Antenne $ANT_{SE}$ ausgesendet wurde, empfangen. Der Oszillator SHFO wird mit einer Taktsteuerung TGEN abhängig vom Datenstrom $Dat_{TX}$ durch das Signal S01 zyklisch ein- und ausgeschaltet. Bei geeigneter Wahl des Signals S01 und Anlegen des Hilfs-Trägersignals sH ist das vom Oszillator SHFO generierte Signal s dann, wie in DE 100 32 822 A1 beschrieben, quasikohärent bzw. quasiphasenkohärent zu dem Hilfs-Trägersignal sH. Das im Sender S, insbesondere einem Transponder generierte Signal s wird zurück zum Empfänger gesendet und von diesem mit der Antenne $ANT_E$ empfangen. Das im Empfänger E empfangene Signal e, welches abgesehen von Beeinflussungen bei der Übertragung dem Sendersignal s entspricht, wird im Mischer MIX mit einem Teil des fortwährend vom Oszillator EHFO erzeugten Signals gemischt. Mit einem Filter BP1, das sich vorzugsweise dem Ausgang des Mischers MIX nachgeschaltet ist, werden nicht interessierende Mischkomponenten bzw. störende Signal- und Rauschkomponenten unterdrückt. Vorzugsweise wird dieses Filter BP1 als Bandpaßfilter ausgeführt, wobei die Mittenfrequenz und die Bandbreite des Filters an das Taktsignal von TGEN angepasst sein sollte.

Der Sender S weist den mit der Antenne $ANT_S$ verbundenen Oszillator SHFO auf. Zum Anregen des Oszillators SHFO ist außerdem die Taktsteuerung TGEN bereitgestellt. Der Oszillator SHFO wird mit der Taktsteuerung durch das Signal S01 wechselnd ein- und ausgeschaltet und quasiphasenkohärent anregbar gemacht. Das vom Oszillator SHFO generierte Signal s wird durch Anlegen des empfangenen Hilfs-Trägersignals sH quasikohärent zu dem Hilfs-Trägersignal sH erzeugt. Durch das Ein- und Ausschalten des Oszillators SHFO wird auch seine quasiphasenkohärente Anregbarkeit geschaltet.

Der Oszillator SHFO ist vorteilhafterweise so ausgebildet, dass er einerseits nicht durch thermisches Rauschen zur Oszillation angeregt wird, aber andererseits das auf ihn eingekoppelte Empfangs- bzw. Hilfs-Trägersignal sH ausreicht, um eine zum Hilfs-Trägersignal sH quasiphasenkohärente Oszillationen anzuregen. Quasiphasenkohärent heißt dabei insbesondere auch, dass die Phasendifferenz zwischen dem Hilfs-Trägersignal und dem erzeugten Vergleichssignal während einer Einschaltperiode des Signals S01 klein bleibt, wobei der Begriff klein in Bezug zur beabsichtigten Kommunikations- bzw. Messaufgabe zu sehen ist. Als Grenze für eine kleine Phasenabweichung kann zum Beispiel der Wert $\pi/10$, also ca. 20° verwendet werden. Solche Signale mit nur kleinen Phasenabweichungen werden hier als quasi phasenkohärent bezeichnet und die Zeitspanne, in der diese Kohärenz besteht, als Kohärenzzeitlänge.

Zweckmäßig ist hierbei, dass nicht nur die Oszillationen des aktiven Oszillators SHFO quasiphasenkohärent zum Hilfs-Trägersignal sH sind, sondern bereits die Anregung des aktiven Oszillators SHFO quasiphasenkohärent geschieht. Somit wird im vorzugsweise als Transponder TR ausgebildeten Sender S ein mehr oder weniger großer Teil eines Empfangs- bzw. Hilfs-Trägersignals sH auf den Oszillator SHFO gekoppelt. Vorzugsweise handelt es sich um ein elektrisches Hilfs-Trägersignal und ein entsprechendes Oszillatorsignal. Realisierbar ist prinzipiell aber auch eine Anordnung unter Verwendung optischer, akustischer oder anderer Signale. Das Empfangs- bzw. Hilfs-Trägersignal sH regt den Oszillator SHFO quasiphasenkohärent zu Oszillationen an, wodurch dieser ein Oszillatorsignal erzeugt, welches aus dem Oszillator als das Signal s ausgekoppelt und über einen Ausgang abgeleitet wird. Der Eingang für das Empfangs- bzw. Hilfs-Trägersignal sH und der Ausgang für das Oszillatorsignal können ganz oder teilweise identisch sein. Sie können aber auch getrennt voneinander realisiert werden.

Das im Sender S generierte Signal s wird mittels der Antenne $ANT_S$ zum Empfänger E zurück gesendet und von dieser mit der Antenne $ANT_E$ empfangen.

Ein Grundgedanke bei den Ausführungsbeispielen besteht darin, dass nicht nur die Oszillationen des aktiven Oszillators SHFO im Sender S quasiphasenkohärent zum Hilfs-Trägersignal sH sind, sondern bereits die Anregung des aktiven Oszillators SHFO quasiphasenkohärent geschieht. Während bei früheren Vorrichtungen und Verfahren nach dem Stand der Technik das Anregen des aktiven Oszillators SHFO durch thermisches Rauschen erfolgt, und seine Oszillationen erst später durch einen aufwendigen Regelprozess und ein sogenanntes LockIn quasiphasenkohärent gemacht werden, wird vorliegend der Oszillator SHFO durch das Hilfs-Trägersignal sH bereits quasiphasenkohärent angeregt bzw. schwingt bereits quasiphasenkohärent an und es wird damit gleichsam automatisch die Phasenkohärenz hergestellt.

Ein Grundgedanke besteht darin, dass ein Oszillator SHFO sich im Grundzustand in einem labilen Gleichgewicht befindet, und, wenn er eingeschaltet wird, durch eine wie auch immer geartete Fremdenergiezufuhr erst dazu angeregt werden muss, zu schwingen. Erst nach diesem initialen Anstoßen wird die Rückkopplung aktiv, mit der die Schwingung aufrechterhalten wird. Üblicherweise wird zum Beispiel das thermische Rauschen zu einer solchen Initialisierung eines Schwingkreises verwendet. Das heißt, dass ein Oszillator mit einer zufälligen Phase und Amplitude anschwingt und dann bei seiner durch seinen Resonanzkreis vorgegebenen Frequenz oszilliert. Wird in den Oszillator beim Einschalten jedoch ein externes Anregungssignal injiziert, dessen Frequenz in der Bandbreite des Resonanzkreises liegt und dessen Leistung nennenswert oberhalb der Rauschleistung liegt, so schwingt der Oszillator nicht zufällig, sondern synchron mit der Phase des anregenden Basissignals an. Je nach Frequenzdifferenz zwischen dem anregenden Hilfs-Trägersignal sH und dem Oszillatorsignal und in Abhängigkeit vom Phasenrauschen der beiden Oszillatoren SHFO bzw. EHFO im Sender S bzw. im Empfänger E bleibt diese Quasiphasenkohärenz zumindest eine Zeit lang bestehen.

Der Unterschied des vorliegenden Konzeptes zu den bekannten passiven Vorrichtungen und Verfahren besteht in der Verwendung eines aktiven Oszillators SHFO im Sender S bzw. Transponder TR. So wird das Hilfs-Trägersignal sH nicht einfach zurückgespiegelt, sondern es wird vor dem Zurücksenden mit einer eigenen quasiphasenkohärenten Quelle rauschfrei oder nahezu rauschfrei ein Oszillatorsignal s aktiv konstruiert. Das System hat dabei bei sonst ähnlicher Funktion daher eine signifikant höhere Rechweite als passive Backscatter-Transponder Systeme nach dem Stand der Technik.

Ein besonderer Vorteil besteht bei Transponderanordnungen darin, dass keinerlei Zeit, Frequenz oder Polarisationsmultiplex notwendig ist, da sich das Hilfs-Trägersignal sH als Basissignal und das Oszillatorsignal s gegenseitig nicht beeinflussen, bzw. nur zu Beginn des Einschwingvorganges in gewünschter Art und Weise beeinflussen und danach unabhängig voneinander quasiphasenkohärent sind.

Vorteilhaft ist es, wenn die Vorrichtung ein Schaltmittel TGEN zum Schalten der quasiphasenkohärenten Anregbarkeit des aktiven Oszillators SHFO aufweist. Dieses Schaltmittel TGEN dient dazu, den aktiven Oszillator SHFO in einen Zustand zu versetzen, aus dem er, durch das Hilfs-Trägersignal sH angeregt, quasiphasenkohärent zu dem Hilfs-Trägersignal sH anschwingen kann.

Für ein Schalten der Anregbarkeit müssen nicht unbedingt die Oszillationen komplett ein- und ausgeschaltet werden. Wenn zum Beispiel der aktive Oszillator SHFO mit unterschiedlichen Moden schwingen kann, kann einfach eine zweite Mode geschaltet werden, während die erste weiterschwingt. Auch bei nur einer Mode muss die Oszillation nicht vollständig abgeschaltet werden, sondern es reicht in der Regel eine Dämpfung, so dass das Hilfs-Trägersignal sH zur nächsten quasiphasenkohärenten Anregung ausreicht.

Wird die Anregbarkeit des aktiven Oszillators SHFO nach der Kohärenzzeitlänge erneut eingeschaltet, so bleibt die Quasiphasenkohärenz über einen längeren Zeitraum bestehen.

Wird in Weiterbildung die quasiphasenkohärente Anregbarkeit des aktiven Oszillators zyklisch wiederholt, so bleibt die Quasiphasenkohärenz auch über längere Zeiträume bestehen. Dies kann dadurch erreicht werden, dass das Schaltmittel so ausgebildet ist, dass es den aktiven Oszillator SHFO mit einer vorgegebenen Taktrate schaltet.

Vorzugsweise entspricht die Dauer der Taktzyklen der Taktrate dabei in etwa der Kohärenzzeitlänge. Es ist aber auch ein schnelleres Schalten möglich, ohne dass die Quasikohärenz zwischen Basissignal sH und Oszillatorsignal sH verloren geht. Wenn anders herum die Quasiphasenkohärenz nur in bestimmten Zeitabschnitten notwendig ist, kann die Taktzeit auch länger gewählt werden als die Kohärenzlänge.

Wird das Schalten des aktiven Oszillators SHFO zyklisch wiederholt und schwingt der aktive Oszillator SHFO zyklisch quasiphasenkohärent zum Hilfs-Trägersignal sH an, so kann das vom aktiven Oszillator erzeugte Oszillatorsignal als ein abgetastetes Duplikat des Hilfs-Trägersignals sH aufgefasst werden. Bei Einhaltung des Abtasttheorems ist ein Signal vollständig durch seine Abtastwerte beschrieben. Sinnvollerweise ist die Ausschaltzeitdauer des aktiven Oszillators nicht deutlich länger als die Einschaltzeitdauer, also nicht deutlich länger als die Kohärenzzeitlänge. Die Einhaltung des Abtasttheorems ergibt sich daher wegen der Kohärenzbedingung immanent. Laut Abtasttheorem muss die Phasendifferenz zwischen zwei Abtastpunkten kleiner als 180° sein. Diese Bedingung ist weniger restriktiv als die Quasikohärenzbedingung. In Konsequenz ist aus informationstechnischer Sicht das Signal s des geschalteten Oszillators SHFO, trotz des Schaltvorganges, als ein Abbild des Vergleichssignals anzusehen bzw. trägt dessen vollständige Information.

Die Anregbarkeit des aktiven Oszillators SHFO lässt sich relativ einfach schalten, indem der Oszillator SHFO selbst geschaltet wird. Entsprechend kann die Vorrichtung ein Mittel TGEN zum Ein- und Ausschalten des aktiven Oszillators SHFO aufweisen. Zum Schalten des Oszillators ist jegliches Mittel geeignet, das bewirkt, dass die Schwingbedingung des Oszillators gegeben bzw. nicht mehr gegeben ist. So kann z.B. im Schwingkreis die Verstärkung abgeschaltet, Dämpfungen oder Laufzeiten (Phasen) verändert oder der Rückkoppelzweig aufgetrennt werden.

Der aktive Oszillator SHFO kann außer auf seiner Grundmode auch quasiphasenkohärent auf einer seiner subharmonische Schwingungsmoden angeregt werden. Zur Anregung kann dabei die Grundmode oder eine subharmonischen Schwingungsmode des Basissignals dienen.

Wird die Vorrichtung zur Identifikation als ID-Tag oder zur Kommunikation verwendet, so kann die Codierung zum Beispiel durch die Taktrate erfolgen und/oder durch eine zusätzliche Modulationseinheit wie etwa einen Phasen-, Frequenz- oder Amplitudenmodulator, mit der das quasiphasenkohärente Signal vor dem Zurücksenden moduliert wird.

Wie bereits dargelegt wurde, ist die Kohärenzzeitlänge von der Frequenzdifferenz zwischen Basis- und Oszillatorsignal abhängig. Je genauer die Frequenzen übereinstimmen, desto länger sind die Phasen der Signale nahezu gleich. Um die Kohärenzzeitlänge zu vergrößern, wodurch auch die Taktrate des Schaltmittels gering gehalten werden kann, kann es vorteilhaft sein, Mittel vorzusehen, die dazu geeignet sind, die Oszillatorfrequenz adaptiv an die Frequenz des Basis- bzw. Hilfs-Trägersignals sH anzupassen.

Wie bei der nachfolgenden Beschreibung einzelner Ausführungsbeispiele z.B. Fig. 1 zu entnehmen ist, unterscheidet sich das dargestellte System von bekannten früheren Backscatter-Transpondern im wesentlichen dadurch, dass das moduliert zurückgesendete Signal s nicht einfach passiv zurück reflektiert wird, sondern aktiv quasi-phasenkohärent neu generiert und zurückgesendet wird. Die Grund-Prinzipien und Ausführungsvarianten sowie typische Signalverarbeitungsmethoden von Standard-Backscatter-Transponderen können daher direkt auf das vorliegende Anordnungsprinzip übertragen werden. Jedoch ergeben sich bei der Ausführung einige Besonderheiten, die besonders vorteilhafte Anordnungen ermöglichen, wie folgt.

Senderseitig werden Daten $Dat_{TX}$ z.B. direkt dem phasenkohärenten Signal aufmoduliert oder bereits bei der Erzeugung eines Taktsignals S01 für den Oszillator SHFO in das Taktsignal S01 eingearbeitet.

In Empfänger E werden die aufmodulierten Daten $Dat_{TX}$ aus dem empfangenen Signal e bzw. s wieder heraus demoduliert. Dazu durchläuft das empfangenen Signals e z.B. den Mischer MIX, in dem der Einfluss des zugrundeliegenden Oszillatorsignals herausgezogen wird. Anschließend kann eine Bandpaßfilterung im Filter BP1 erfolgen, bevor dessen Ausgangssignal ZFSig einem Demodulator Demod zugeführt wird. Am Ausgang des Demodulators Demod werden die rekonstruierten Daten $Dat_{RX}$ ausgegeben.

Besonders vorteilhaft umfasst eine Empfängerstation E des Kommunikationssystems einen sogenannten Transmissionsmischer TRXMIX, der umgangssprachlich auch als Durchblasemischer bezeichnet wird. Eine mögliche Ausführungsform einer Empfangsstation E mit Durchblasemischer TRXMIX zeigt Figur 2. Das vom Oszillator EHFO generierte Signal wird als Hilfsträger sH durch den Transmissionsmischer hindurch zur eigentlichen Daten-Sendestation S übertragen und dient gleichzeitig dazu, das modulierte Empfangssignal e mit dem Mischer TRXMIX ins Basisband herunterzumischen. Es ist ersichtlich, dass mit einem Transmissionsmischer TRXMIX mit minimalem Bauteileaufwand das vorteilhafte Verfahren zum Übertragen von Daten umgesetzt werden kann.

Fig. 3 zeigt eine weitere mögliche Ausführungsform zur Realisierung der Modulation mit schaltbarer Phasenverschiebung mittels eines Phasensteuerglieds PhMod im Transponder S bzw. TR. Mit dem Phasensteuerglied PhMod könnte sowohl das Basissignal zur quasi-phasenkohärenten Anregung als auch das quasi kohärent erzeugte Signal phasenmoduliert werden. Die Modulation des prinzipbedingt notwendigen Taktes 0/1 des Taktgenerators TGEN wird hierbei von der Phasenmodulation überlagert.

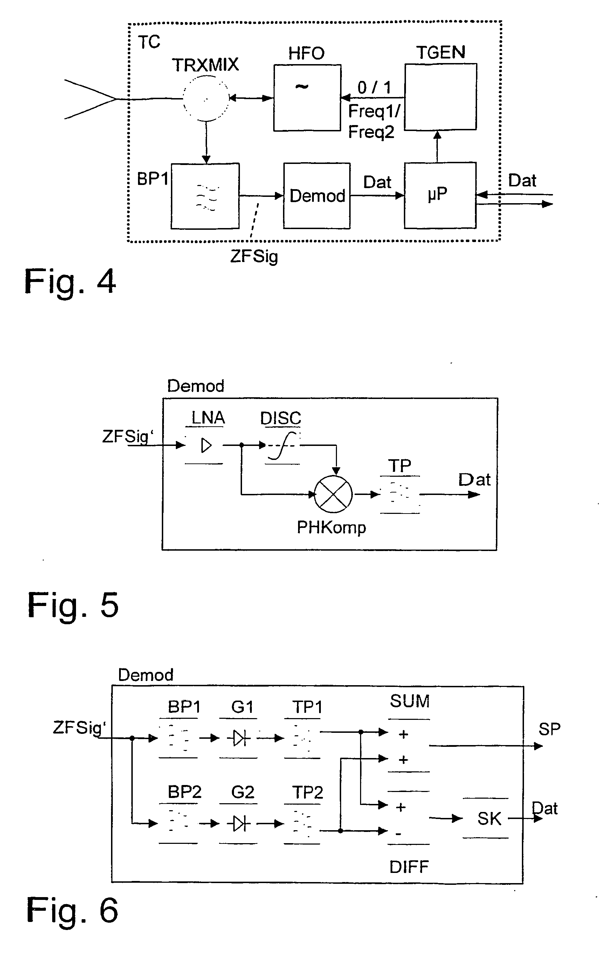

In vielen Anwendungsfällen ist es günstig, die als Empfänger E dienende Basisstation und oder den Transponder TR bzw. Sender S als Transceiver TC auszuführen, also derart, dass Daten zwischen den Stationen in beide Richtungen übertragen werden können. Fig. 4 zeigt eine günstige Realisierungsvariante.

Die Anordnung besteht z.B., aus einer Antenne, die am Mischer TRXMIX angeschlossen ist. Der Mischer TRXMIX empfängt ein Basissignal von einem Oszillator HFO. Der Oszillator weist wiederum einen Eingang für ein Anstoß- bzw. Triggersignal 0/1 auf, welches von einem Taktgenerator TGEN zugeführt wird. Der Mischer TRXMIX weist ferner einen Ausgang auf, aus dem ein über die Antenne empfangenes und heruntergemischtes Signal ausgegeben wird, beispielsweise als erstes zu einem Bandpaßfilter BP1. Dessen Ausgangssignal ZFSig wird wiederum einem Demodulator Demod zugeführt, welcher an seinem Ausgang rekonstruierte Daten Dat bereitstellt. Diese Daten können direkt ausgegeben oder bevorzugt zur weiteren Verarbeitung einem Mikroprozessor μP zugeführt werden.

Der Mikroprozessor μP kann mit Hilfe der empfangenen Daten oder auch von sich aus Einfluss auf die Erzeugung des Oszillatorsignals nehmen, z.B. über eine Verbindung zum Taktgenerator TGEN. Möglich ist auch die Zuführung von zu versendenden Daten über den Mikroprozessor μP, den Taktgenerator TGEN, den Oszillator HFO oder eine dem Mischer TRXMIX vorgeschalteten Phasenmodulator.

Wird der Oszillator HFO durch den Taktgenerator TGEN nicht moduliert, so dass er ein kontinuierliches gleichförmiges Sinussignal erzeug, so dient die dargestellte Station TC als Empfänger E. Wird der Oszillator HFO durch den Taktgenerator in seiner quasi-phasenkohärenten Anregbarkeit und in seiner Amplitude, Phase und/oder Frequenz moduliert, so dient die dargestellte Station TC als Sender S. Vorzugsweise umfasst ein solcher Transceiver TC den Prozessor μP, der entweder zum Erzeugen des Datenstroms oder zur Auswertung der empfangenen Daten Dat dient.

Im Prinzip können alle Modulationsarten, wie sie auch sonst bei üblichen passiven Backscatter-Transpondern verwendet werden, in dem vorliegenden System angewendet werden. Für das Prinzip besonders vorteilhaft ist jedoch eine frequenzmodulierte Amplitudenmodulation, bei der lediglich die Frequenz der Schaltperiode zum Kodieren der digitalen Zeichen variiert wird. Der Taktgenerator TGEN erzeugt dann z.B. für eine digitale "0" eine erste Schaltfrequenz Freq1 und für eine digitale "1" eine zweite Schaltfrequenz Freq2. Neben dieser binären FSK-Codierung (Frequency Shift Keying) sind selbstverständliche auch mehrstufige Kodierungsverfahren mit mehr als 2 Frequenzstufen anwendbar. Auch eine Variation des Impuls-Pausenverhältnisses bei konstanter Impuls- bzw. Pausenlänge kann zur Modulation verwendet werden. Grundsätzlich können alle für sich bekannten Verfahren der Frequenzdemodulation verwendet werden.

Fig. 5 und 6 zeigen vom Prinzip her für sich genommen bekannte Ausführungen von FSK-Demodulatoren, die jedoch sehr vorteilhaft in derartigen Anordnungen verwendet werden können.

In Fig. 5 weist der Demodulator Demod einen rauscharmen Eingangsverstärker LNA auf, dem das Signal ZFSig' von z.B. dem Mischer oder Bandpaßfilter zugeführt wird. Das darin vorverarbeitete Signal wird sowohl direkt einem Phasenvergleicher bzw. Phasenkomparator PHKomp als auch einem Frequenzdiskriminator DISC zugeführt. Das Ausgangssignal des Frequenzdiskriminators DISC wird einem weiteren Eingang des Phasenkomparators PHKomp zugeführt. Dessen Ausgangssignal wird nach z.B. dem Durchlaufen eines Tiefpaßfilters TP als Datenstrom Dat aus dem Demodulator Demod ausgegeben. Dabei dient der Frequenzdiskriminator DISC dazu, das ZF-Signal ZFSig' (ZF: Zwischenfrequenz) mit einer frequenzabhängigen Phasenverschiebung zu beaufschlagen. Durch Phasenvergleich, z.B. in einem Mischer, insbesondere dem Phasenkomparator PHComp, kann dann die Frequenzmodulation in eine entsprechende Ausgangsspannung überführt werden. Auch PLL-Schaltungen zur Frequenzdemodulation oder andere frequenzvergleichende Anordnungen sind für das hier beschriebene Verfahren anwendbar.

In Fig. 6 wird das ZF-Signal ZFSig' z.B. durch zwei unterschiedliche Bandpassfilter- / Detektor-Ketten übertragen. Die beiden Ketten bestehen z.B. jeweils aus einem Bandpaßfilter BP1 bzw. BP2, einem Gleichrichter G1 bzw. G2 und einem Tiefpaßfilter TP1 bzw. TP2. Die Ausgangssignale dieser beiden Ketten werden sowohl einem Addierer SUM als auch einem Differenzverstärker DIFF zugeführt. Je nach Modulationsfrequenz hat entweder das eine oder das andere gefilterte Signal eine größere Amplitude, was z.B. durch den Differenzverstärker DIFF mit nachgeschaltetem Komparator SK detektiert werden kann. Der Komparator SK gibt die rekonstruierten Daten Dat aus. Die Summe der Signale aus beiden Filterzweigen ist ein Maß für den Signalpegel SP.

Es sei an dieser Stelle darauf hingewiesen, dass sich das vorliegende Verfahren zur Datenübertragung und die vorliegenden Anordnungen hervorragend mit entfernungsmessenden Transpondersystemen einsetzen bzw. kombinieren lassen. Solche Transpondersysteme sind z.B. in der unveröffentlichten Patentanmeldung DE 101 55 251 "Transpondersystem und Verfahren zur Entfernungsmessung" dargestellt, auf die vollumfänglich Bezug genommen wird.

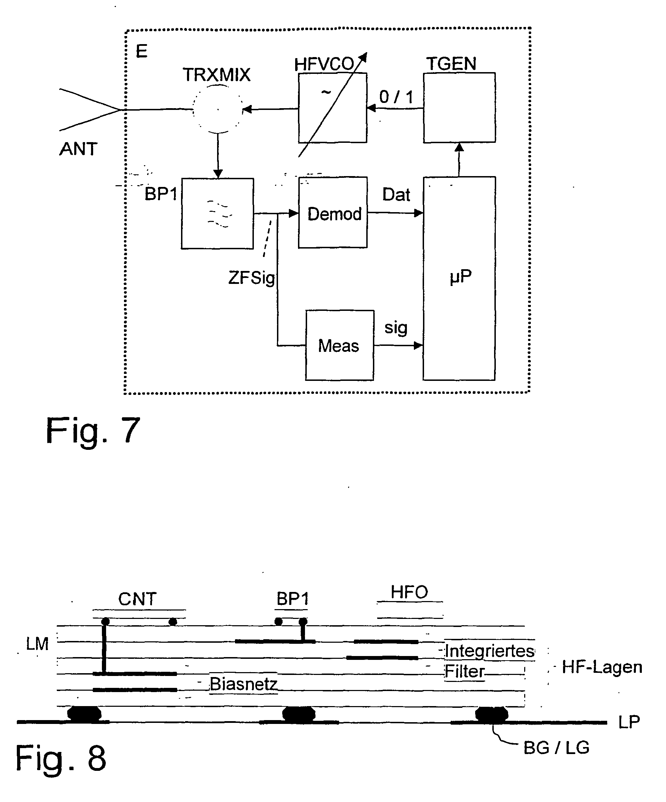

Fig. 7 zeigt die zur Erweiterung der Funktionalität notwendigen Ergänzungen bei einem derartigen entfernungsmessenden Transpondersystem. Anstatt eines Festfrequenz-Oszillators wird hier ein hinsichtlich der Frequenz veränderbarer Oszillator HFVCO verwendet, mit dem zur Entfernungsmessung geeignete frequenzmodulierte Signale erzeugt werden können. Hinter dem Empfangsmischer TRXMIX, der wie dargestellt vorzugsweise als Transmissionsmischer ausgeführt wird, teilt sich das ZF-Signal dann vorzugsweise in zwei Teilpfade auf. Der erste oben dargestellte Demodulationspfad führt vom Bandpaßfilter BP1 aus zum Demodulator Demod und dient zur Aufnahme bzw. Rekonstruktion von Daten. Der zweite, untere Pfad führt als ein Messpfad zu einer Messeinrichtung Meas, in der das ZF-Signal zum Zwecke einer Entfernungsmessung aufbereitet wird.

Ein entsprechendes Verfahren beruht dabei auf dem Bestimmen der Entfernung zwischen einer Basisstation E und zumindest einem Transponder (TR; S), bei dem von der Basisstation E ein Signal sH bzw. $s_{tx}(t)$ eines Basisstations-Oszillators HFVCO ausgesendet wird, im Transponder auf Basis des von der Basisstation empfangenen Signals sH bzw. $e_{rxt}(t)$ mittels eines oszillierenden Oszillators (SHFO) ein dazu phasenkohärentes Signal (s bzw. $s_{OSZ}(t)$) erzeugt und ausgesendet wird, in der Basisstation E anhand des von dem Transponder empfangenen phasenkohärenten Signals (e bzw. $s_{rx}(t)$) die Entfernung bestimmt wird, und der Oszillator zum Erzeugen des phasenkohärenten Signals mit dem empfangenen Signal quasi-phasenkohärent angeregt wird. Hinzu kommen vorliegend ein Datensignal bzw. Daten, welche in das Signal des Transponders TR bzw. Senders S eingemischt oder aufmoduliert werden.

Ein entsprechendes Entfernungs-Bestimmungssystem zum Bestimmen der Entfernung zwischen einer Basisstation E und zumindest einem Transponder (TR), wobei die Basisstation E eine oszillierende Signalquelle HFVCO zum Erzeugen eines Signals und eine Sendeeinrichtung zum Aussenden des Signals aufweist, der Transponder eine Empfangseinrichtung zum Empfangen des Signals von der Basisstation, einen Oszillator zum Erzeugen eines dazu phasenkohärenten Signals und eine Sendeeinrichtung zum Aussenden des phasenkohärenten Signals aufweist, die Basisstation (BS) außerdem eine Empfangseinrichtung zum Empfangen des phasenkohärenten Signals von dem Transponder und eine Entfernungs-Bestimmungseinrichtung (TRXMIX, Demod) zum Bestimmen der Entfernung zwischen Basisstation (E) und Transponder (TR; S) aufweist, kennzeichnet sich dadurch aus, dass der Oszillator im Transponder mit dem empfangenen Signal zum Erzeugen eines quasi-phasenkohärenten Signals angeregt wird und diesem Signal außerdem Daten aufmoduliert werden.

Eine Basisstation E zum Bestimmen der Entfernung eines Transponders (TR; S) weist eine Entfernungs-Bestimmungseinrichtung (RXMIX, BP1, Meas Demod) auf oder liefert Signale zu einer solchen, wobei die Basisstation E einen Mischer TRXMIX zum Mischen des von dem Transponder (TR; S) empfangenen quasi-phasenkohärenten Signals und des momentanen Oszillator- bzw. Sendesignals zu einem Mischsignal aufweist.

Die Entfernungs-Bestimmungseinrichtung TRXMIX, BP1, Demod, Meas ist als solche vorteilhafterweise ausgebildet ist, das Mischsignal ZFSig' bzw. ($s_{mix}(t)$) zu bilden durch

$$s_{mix}(t) = \cos(t \cdot \omega_{sw} + \tau \cdot (\omega_c + \omega_{sw}))$$

mit $\omega_c$ als Mittenfrequenz des Basisstations-Oszillators HFVCO, $\omega_{sw}$ als Modulationsfrequenz des Sendesignals SH bzw. $s_{tx}(t)$ der Basisstation E, t als der Zeit im Zeitintervall 0 - Ts und $\tau$ als Laufzeit der Signale über die Entfernung zwischen Basisstation E und Transponder (TR; S).

Die Entfernungs-Bestimmungseinrichtung TRXMIX, BP1, Demod, Meas weist vorteilhafterweise eine Demodulationseinrichtung Demod zum Reduzieren oder Eliminieren zeitlicher Änderungen der Spannung des Mischsignals $s_{mix}(t)$ im Zeitintervall (0 - TS) zwischen Ein- und Ausschalten der Messung in der Basisstation E zum Erzeugen eines Messsignals $s_{mess}(t)$ auf.

Die Entfernungs-Bestimmungseinrichtung TRXMIX, BP1, Demod, Meas weist vorteilhafterweise auch eine Demodulationseinrichtung Demod zum Heruntermischen des Mischsignals $s_{mix}(t)$, insbesondere mit einer Frequenz nahe oder gleich einer Taktfrequenz $f_{mk}$, auf eine Frequenz deutlich kleiner als der TaktFrequenz $f_{mk}$ zum zyklischen Ein- und Ausschalten des Oszillators HFVCO im Transponder (TR) und anschließendem Herausfiltern hoher Frequenzanteile zum Erzeugen eines Messsignals $S_{mess}(t)$ auf.

Die Entfernungs-Bestimmungseinrichtung TRXMIX, BP1, Demod, Meas kann ferner ausgebildet sein, die Modulationsfrequenz $\omega_{sw}$ des Sendesignals $s_{tx}(t)$ der Basisstation E zu modulieren, insbesondere gemäß

$$\omega_{sw} = \frac{2 \cdot \pi \cdot B \cdot t}{T}$$

mit T als einer Zeitdauer, über welche die Frequenz über die Bandbreite B verstimmt wird.

Die Entfernungs-Bestimmungseinrichtung TRXMIX, BP1, Demod, Meas kann auch zum Bilden des resultierenden FMCW-Messsignals $S_{messfmcw}(t)$ durch

$$s_{messfmcw}(t) = \cos\left(\omega_c \cdot \tau + \frac{2 \cdot \pi \cdot B \cdot t \cdot \tau}{T} + \frac{\pi \cdot B \cdot t \cdot T_s}{T}\right) \cdot \frac{\sin\left(\frac{\pi \cdot B \cdot t \cdot T_s}{T}\right)}{\left(\frac{\pi \cdot B \cdot t}{T}\right)}$$

ausgebildet werden.

Die Entfernungs-Bestimmungseinrichtung TRXMIX, BP1, Demod, Meas kann ferner zum Bestimmen der Entfernung aus der Messfrequenz $f_{mess}$ ausgebildet werden, die der normalen, um einen Frequenzanteils $\Delta b = B*Ts / (2$

T) verschobenen FMCW-Messfrequenz (Frequency Modulated Continuos Wave) entspricht.

Die Entfernungs-Bestimmungseinrichtung TRXMIX, BP1, Demod, Meas kann auch zum Durchführen einer Fouriertransformation des amplitudengewichteten Messsignals $s_{messfmcw}(t)$ in den Frequenzbereich ausgerichtet werden, so dass Kanten eines linken und rechten Seitenbandes zumindest einer entstehenden Rechteckfunktion die Entfernung zwischen Basisstation E und Transponder (TR; S) bestimmen.

Ein Transponder (TR; S) zum Bestimmen von dessen Entfernung zu einer Basisstation E weist zweckmäßigerweise eine Signalerzeugungseinrichtung zum Erzeugen eines Oszillatorsignals S bzw. $s_{osz}(t)$ aus einem Transponder-Empfangssignal sH bzw. $e_{rxt}(t) = s_{tx}(t-\tau/2)$ mit einem aktiven, phasenkohärent angeregten Oszillator (SHFO) und eine Schalteinrichtung (TGEN) zum zyklischen Ein- und Ausschalten des Oszillators auf, insbesondere zum Erzeugen des Oszillatorsignals gemäß

$$s_{rx}(t) = s_{osz}^{'}(t - \frac{\tau}{2}) = \sin(\omega_{osz} \cdot t - (\omega_c + \omega_{sw}) \cdot \tau + \phi_o)$$

mit $\omega_c$ als Mittenfrequenz des Oszillators HFVCO der Basisstation E, $\omega_{sw}$ als Modulationsfrequenz des Sendesignals $s_{tx}(t)$ der Basisstation E, t als der Zeit, $\tau$ als Laufzeit der Signale über die Entfernung zwischen Basisstation E und Transponder (TR) und $\phi_0$ als beliebigem Phasenoffset.

Bei einem solchen Entfernungs-Bestimmungssystem wird zusätzlich eine Modulation zum Ein- und Ausschalten des Oszillators (SHFO) im Transponder (TR; S) zum Übertragen von zusätzlichen Informationen bzw. Daten vom Transponder zur Basisstation E verwendet, wie dies vorstehend anhand diverser Ausführungsbeispiele dargestellt ist.

Wenn die Entfernungs-Bestimmungseinrichtung in der Basisstation einen Mischer TRXMIX zum Mischen des von dem Transponder empfangenen quasi-phasenkohärenten Signals und des momentanen Sendesignals zu einem Mischsignal aufweist, so entsteht ein Messsignal, das zumindest 2 Spektralkomponenten aufweist, deren Frequenzabstand oder Phasenabstand ein Maß für Entfernung von der Basisstation zum Transponder ist, wobei dieses Maß von der Ein- und Ausschaltfrequenz des Oszillators im Transponder unabhängig ist.

Die Modulationsfrequenz des Sendesignals der Basisstation zu modulieren bzw. zu verstimmen, führt letztendlich zu einem Messsignal welches Spektralanteile aufweist, welche durch Cosinus-Funktionen ausgedrückt werden, die amplitudengewichtet sind. Vorteilhafterweise wird durch eine dem beschriebenen Transponder eigenen Frequenzverschiebung, eine Messung auch von kleinen Entfernungen bis zu einem Wert von Null herab möglich. Das außerdem mögliche Durchführen einer Fouriertransformation des amplitudengewichteten Messsignals in den Frequenzbereich führt zu Spektrallinien (Seitenbändern) mit einer Rechteck-förmigen Einhüllenden, bei der die äußeren, der Modulationsfrequenz am nächsten liegenden Kanten eines linken und rechten Seitenbandes die Entfernung zwischen Basisstation und Transponder bestimmen.

Dadurch, dass die Modulationsfrequenz zum Ein- und Ausschalten des Oszillators im Transponder nicht zwingend in die Auswertung der Entfernung in der Basisstation eingeht, kann sie zum Übertragen von zusätzlichen Informationen bzw. Daten vom Transponder zur Basisstation verwendet werden.

Bei den zuvor genannten Applikationen ist es in aller Regel sehr vorteilhaft, wenn die Hochfrequenzmodule und insbesondere der Transponder TR möglichst klein und kompakt aufgebaut sind. Bei Zugangssystemen oder Bezahl-Systemen, bei denen der Transponder TR üblicherweise von einer Person am Körper getragen wird, bestimmt beispielsweise die Baugröße des Transponders TR, z.B. in Form eines Schlüssels oder einer Zahl-/ Eintrittskarte, maßgeblich den Tragekomfort.

Üblicherweise werden Hochfrequenzmodule auf Leiterplatten aus organischen Materialien, z.B. Teflon®- oder Epoxid-basiert, aufgebaut. Insbesondere bei niedrigen HF-Frequenzen, z.B. 1 GHz - 10 GHz, ist der Wunsch nach kleinen Baugrößen aufgrund der Verkopplung zwischen Wellenlänge und Strukturgröße mit diesen Materialien nur sehr eingeschränkt zu erfüllen. Eine Alternative sind Schaltungen auf Dünnschicht-Keramiken, deren Fertigung aber sehr kostenintensiv ist.

Daher lassen sich sowohl der Transponder TR als auch die Basisstation BS besonders vorteilhaft als LTCC- (Low Temperature Cofired Ceramic / Niedertemperatur-gesinterte Keramik) Modul oder unter Verwendung von LTCC-Modulen umsetzen. Die Hochfrequenzstrukturen auf LTCC-Basis sind zum einen wegen der relativ großen Dielektrizitätszahl von LTCC kompakt aber zum anderen auch deswegen, da die Möglichkeit besteht, die Schaltung in Mehrlagentechnik zu realisieren. Die Herstellung von LTCC ist kostengünstig. Außerdem sind LTCC-Module massenfertigungstauglich bestückbar.

Da die komplette HF-Schaltung oder kritische Teilkomponenten vollständig in einem LTCC-Modul integrierbar sind, können diese integrierten LTCC-Module wie Standard-SMT-Bauteile (Surface Mount Technology/Oberflächenmontagetechnologie) auf sehr kostengünstige Standard-Leiterplatten, die ihrerseits nicht unbedingt HF-tauglich sind, bestückt werden. Es besteht natürlich auch die Möglichkeit, die Technologien zu kombinieren und LTCC-Submodule auf Leiterplatten aus organischen Materialien, die dann aber deutlich kleiner sein können, aufzubauen.

Ein vorteilhafter Transponder TR mit LTCC-HF-Modulen ist in Fig. 8 dargestellt. Auf dem LTCC-Modul LM sind beispielsweise ein Hochfrequenz-Oszillator HFO, ein Bandpassfilter BP1 zum Ausfiltern von störenden Modulationskomponenten, die durch das Schalten (ein/aus) des Oszillators HFO mit dem Takt von einem Taktgenerator TGEN entstehen, und ein Hochfrequenz-Teiler oder -Zähler CNT integriert. Über einen Regelkreis, dem ein heruntergeteilter Takt bzw. der Zählerstand zugeführt wird, wird der Oszillator HFO auf seine Zielfrequenz geregelt, wie dies z.B. bei Ausführungsformen gemäß Fig. 7 üblich ist. Aus dem LTCC-Modul LM werden, bis auf den Anschluß der Antenne, lediglich digitale, vergleichsweise niederfrequente Signale nach außen geführt, so dass dieses Modul LM problemlos und kostengünstig in die restliche Schaltung integriert werden kann.

Ein möglicher Aufbau des LTCC-Moduls ist in Fig. 8 schematisiert. Die HF-Schaltung besteht dabei aus mehreren Schichten bzw. Hf-Lagen. Auf die Oberseite des LTCC-Substrats werden die Bauteile bestückt, die nicht in die inneren Schichten zu integrieren sind, in erster Linie z.B. Halbleiter. Als Bestückungstechnik bieten sich insbesondere die für sich bekannten SMT-Bestückung (Surface Mount Technology) oder Flip-Chip-Bestückung an. Das LTCC-Modul LM selber kann z.B. mit sogenannter Ball-Grid- oder Land-Grid-Technik BG/LG auf eine Standard-Leiterplatte LP montiert werden.

**Patentansprüche**

1. Vorrichtung zum Erzeugen eines Oszillatorsignals (s) basierend auf einem Basissignal (sH) mit

 - einem Oszillator (SHFO) zum aktiven Konstruieren des Oszillatorsignals (s) durch Oszillationen,
 - einem Eingang (ANT$_s$) für das Basissignal (sH) und
 - einem Ausgang (ANT$_s$) für das erzeugte Oszillatorsignal (s),
 - wobei der Oszillator (SHFO) mit Hilfe eines von einem Taktgenerator (TGEN) erzeugten Steuersignals (S01, 0/1) quasiphasenkohärent anregbar gemacht wird und durch das Basissignal (sH) zum Erzeugen des Oszillatorsignals (s) quasiphasenkohärent zum Basissignal (sH) anregbar ist,

 **dadurch gekennzeichnet,**
 **dass** die Vorrichtung als Transceiver ausgestaltet ist,

 - wobei die Vorrichtung (TC) als Empfänger (E) dient, wenn der Oszillator (HFO) durch den Taktgenerator TGEN nicht moduliert wird,
 - und wobei die Vorrichtung (TC) als Sender (S) dient, wenn der Oszillator (HFO) durch den Taktgenerator in seiner quasi-phasenkohärenten Anregbarkeit und in seiner Amplitude, Phase und/oder Frequenz moduliert wird.

2. Verfahren zum Übertragen von Daten mit einer Vorrichtung (TC) zum Erzeugen eines Oszillatorsignals (s) basierend auf einem Basissignal (sH) mit

 - einem Oszillator (SHFO) zum aktiven Konstruieren des Oszillatorsignals (s) durch Oszillationen,
 - einem Eingang (ANT$_s$) für das Basissignal (sH) und
 - einem Ausgang (ANT$_s$) für das erzeugte Oszillatorsignal (s),
 - wobei der Oszillator (SHFO) mit Hilfe eines von einem Taktgenerator (TGEN) erzeugten Steuersignals (S01, 0/1) quasiphasenkohärent anregbar gemacht wird und durch das Basissignal (sH) zum Erzeugen des Oszillatorsignals (s) quasiphasenkohärent zum Basissignal (sH) anregbar ist,

 **dadurch gekennzeichnet,**
 **dass** die Vorrichtung zwischen einem Dienen als Empfänger (E) und als Sender (S) geschaltet wird,

 - indem der Oszillator (HFO) durch den Taktgenerator TGEN nicht moduliert wird, wenn die Vorrichtung (TC) als Empfänger (E) dient,
 - und indem der Oszillator (HFO) durch den Taktgenerator in seiner quasi-phasenkohärenten Anregbarkeit und in seiner Amplitude, Phase und/oder Frequenz moduliert wird, wenn die Vorrichtung (TC) als Sender (S) dient.

**Claims**

1. Apparatus for generating an oscillator signal (s) basing on a base signal (sH), comprising:

- an Oscillator (SHFO) for active constructing the oscillator signal (s) with oscillations,
- an input (ANT$_s$) for the base signal (sH) and
- an output (ANT$_s$) for the generated oscillator signal (s),
- in which the oscillator (SHFO) is configured to be activatable in an quasi-phase-coherent manner aided by a control signal (S01, 0/1) generated by a clock generator (TGEN) und is activatable by the base signal (sH) for generating the oscillator signal (s) in the quasi-phase-coherent manner with respect to the base signal (sH),

**characterized in that**

- the apparatus being configured as transmitter,
- the apparatus (TC) being used as receiver (E), if the oscillator (HFO) is not modulated by the clock generator (TGEN),
- and in which the apparatus (TC) serves as transmitter (S), if the oscillator (HFO) is modulated by the clock generator in its quasi-phase-coherent manner, phase and/or frequency.

2. Method for transmitting of data with an apparatus (TC) for generating an oscillator signal (s) basing on a base signal (sH), comprising

- an oscillator (SHFO) for active constructing the oscillator signal (s) by oscillations,
- an input (ANT$_s$) for the base signal (sH) and
- an output (ANT$_s$) for the generated oscillator signal (s),
- in which the oscillator (SHFO) is configured to be activated quasi-phase-coherent aided by a control signal (S01, 0/1) generated by a clock generator (TGEN) und is activatable by the base signal (sH) for generating the oscillator signal (s) in the quasi-phase-coherent manner with respect to the base signal (sH),

**characterized in that**

- the apparatus being switched between being used as receiver (E) and as transmitter (S),
- by not modulating the oscillator (HFO) by the clock generator (TGEN) if the apparatus (TC) being used as receiver (E),
- and by modulating the oscillator (HFO) by the clock generator in its quasi-phase-coherent manner, phase and/or frequency if the apparatus (TC) being used as transmitter (S).

**Revendications**

1. Dispositif pour générer un signal d'oscillateur (s) basé sur un signal de base (sH) comprenant

- un oscillateur (SHFO) pour la construction active du signal d'oscillateur (s) par des oscillations,
- une entrée (ANT$_s$) pour le signal de base (sH) et
- une sortie (ANT$_s$) pour le signal d'oscillateur (s) généré,
- l'oscillateur (SHFO) étant rendu excitable en quasi-cohérence de phase à l'aide d'un signal de commande (S01, 0/1) généré par un générateur d'horloge (TGEN) et étant excitable par le signal de base (sH) pour générer le signal d'oscillateur (s) en quasi-cohérence de phase avec le signal de base (sH),

**caractérisé en ce
que** le dispositif est configuré en émetteur/récepteur,

- le dispositif (TC) servant de récepteur (E) quand l'oscillateur (HFO) n'est pas modulé par le générateur d'horloge (TGEN),
- et le dispositif (TC) servant d'émetteur (S) quand l'oscillateur (HFO) est modulé par le générateur d'horloge dans sa capacité à être excité en quasi-cohérence de phase et dans son amplitude, phase et/ou fréquence.

2. Procédé pour transmettre des données avec un dispositif (TC) pour générer un signal d'oscillateur (s) basé sur un signal de base (sH) comprenant

- un oscillateur (SHFO) pour la construction active du signal d'oscillateur (s) par des oscillations,
- une entrée (ANT$_s$) pour le signal de base (sH) et

- une sortie (ANT$_s$) pour le signal d'oscillateur (s) généré,
- l'oscillateur (SHFO) étant rendu excitable en quasi-cohérence de phase à l'aide d'un signal de commande (S01, 0/1) généré par un générateur d'horloge (TGEN) et étant excitable par le signal de base (sH) pour générer le signal d'oscillateur (s) en quasi-cohérence de phase avec le signal de base (sH),

**caractérisé en ce**

**que** le dispositif est commuté entre un service en récepteur (E) et en émetteur (S),

- l'oscillateur (HFO) n'étant pas modulé par le générateur d'horloge (TGEN) quand le dispositif (TC) sert de récepteur (E),
- et l'oscillateur (HFO) étant modulé par le générateur d'horloge dans sa capacité à être excité en quasi-cohérence de phase et dans son amplitude, phase et/ou fréquence quand le dispositif (TC) sert d'émetteur (S).

EP 1 481 367 B1

Fig. 1

Fig. 2

Fig. 3

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032822 A1
- DE 10032822
- DE 10155251